# FASCICULE DE BREVET EUROPEEN

(11) **EP 2 661 376 B1**
(45) Date de publication et mention de la délivrance du brevet: **28.09.2016**
(21) Numéro de dépôt: 11804979.0
(22) Date de dépôt: 09.12.2011
(51) Int. Cl.: B60C 11/04, B60C 19/00, B60C 11/03

(54) **PNEU POUR VEHICULE POIDS LOURD ET ARRANGEMENT DE PNEUS SUR ESSIEU MOTEUR ET SUR ESSIEU DIRECTEUR**
REIFEN FÜR SCHWERLASTFAHRZEUG UND ANORDNUNG VON REIFEN AUF LENKACHSE UND AUF ANTRIEBACHSE
TIRE FOR HEAVY DUTY VEHICLE AND ARRANGEMENT OF TIRES OF A DRIVE AXLE AND A STEERING AXLE

(30) Priorité: 04.01.2011 FR 1150035
(43) Date de publication de la demande: 13.11.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BONHOMME, Patrice, F-63270 Parent (FR)
(74) Mandataire: Diernaz, Christian
(86) Numéro de dépôt international: PCT/EP2011/072353
(87) Numéro de publication internationale: WO 2012/093019

(56) Documents cités:
- EP-A1- 0 578 216
- EP-A1- 2 202 098
- EP-A2- 0 148 721

## Description

### DOMAINE DE L'INVENTION

La présente invention concerne les pneus pour véhicules poids lourd et plus particulièrement les bandes de roulement de tels pneus. Elle concerne en outre un arrangement de pneus équipant un essieu moteur d'un véhicule poids lourd.

### ÉTAT DE LA TECHNIQUE

Il est usuel dans le domaine des véhicules poids lourd d'équiper les essieux avant (essieu directeur) et arrière (essieu moteur) d'un véhicule poids lourd avec des pneus adaptés aux sollicitations spécifiques de chaque essieu (sollicitations transversales pour essieu directeur ou porteur, sollicitations de couple moteur et freineur sur essieu moteur), ceci dans le but d'optimiser les performances de ce véhicule notamment en ce qui concerne sa motricité, son freinage et sa capacité à suivre une trajectoire imposée. On parle de « monte » ou « arrangement » pour désigner les pneus équipant un même essieu et la manière dont ils sont montés sur cet essieu.

En règle générale, il est en outre nécessaire de changer de type de pneu pour chaque essieu en fonction de la période de l'année : pour des roulages hors période hivernale, on utilise habituellement des pneus dont les bandes de roulement sont pourvues avec certains dessins de sculpture tandis que pour des roulages ayant lieu en période hivernale, il est préconisé de monter sur ces mêmes essieux des pneus dont les bandes de roulement ont des dessins de sculpture différents des précédentes et elles aussi adaptées aux conditions de roulage sur routes enneigées ou verglacées. Par sculpture, on entend le dessin à la fois sur la surface de la bande de roulement à l'état neuf (appelée surface de roulement) et complémentairement le dessin dans l'épaisseur de la bande. Cette sculpture est constituée d'éléments en relief délimités par des rainures elles-mêmes délimitées par des parois en vis-à-vis distantes d'une quantité suffisante pour que ces parois ne viennent pas en contact l'une contre l'autre pendant le roulage à des conditions usuelles. Par ailleurs, les éléments de relief peuvent comprendre des incisions dont les parois en vis-à-vis sont proches l'une de l'autre au point d'être, au moins partiellement, en contact l'une contre l'autre dans les conditions usuelles d'utilisation.

Le fait de devoir équiper chaque essieu d'un véhicule poids lourd avec des pneus spécifiques conduit à une gestion plus lourde et une quantité de pneus stockés plus important sans omettre des temps d'intervention qui immobilisent les véhicules.

Antérieurement, il a été proposé de réaliser sur un même pneu, destiné à être monté sur un essieu donné, une bande de roulement qui soit adaptée à la fois aux conditions de roulage hivernales et aux conditions de roulage hors hiver.

Par exemple, le brevet US-4905748 combine sur une partie externe et sur une partie interne à la fois matériaux différents, caoutchouc naturel sur un côté et caoutchouc synthétique sur l'autre et des rayons transversaux de la surface de roulement différents. Cette configuration permet d'atteindre un résultat satisfaisant notamment en conditions hivernales et en conditions non hivernales (ces deux matériaux étant l'un et l'autre appropriés pour assurer les performances nécessaires et indispensables en matière de roulage par temps de pluie et par temps sec).

Il est également connu de monter des pneus dont les bandes de roulement ont des sculptures différentes de part et d'autre de leur plan équatorial. Le brevet US-3162229 montre un tel pneu. Ce document enseigne essentiellement la mise en place d'éléments de relief continus circonférentiellement sur la partie du pneu se trouvant vers l'extérieur du véhicule lorsque ce pneu est monté sur ledit véhicule.

Le document EP0148721-A2 montre un pneu selon le préambule de la revendication 1.

### Définitions

Le taux de creux surfacique ou pourcentage de creux surfacique d'une sculpture est égal au rapport entre la surface des parties en creux (essentiellement les rainures) délimités par les éléments de relief et la surface totale (somme des surfaces de contact de ces éléments de relief et des surfaces des creux). Un taux de creux surfacique faible indique une grande surface de contact des éléments de relief et une faible surface de creux entre ces éléments de relief.

Plan médian équatorial : c'est un plan perpendiculaire à l'axe de rotation et passant par les points du pneu radialement les plus éloignés dudit axe ; ce plan divise virtuellement le pneu en deux parties, une première partie, dite partie externe, et une deuxième partie (dite partie interne). Lors du montage du pneu sur un essieu d'un véhicule, la partie interne d'un pneu est celle qui fait face audit véhicule.

Un bloc est un élément en relief formé sur la bande de roulement qui est délimité par des creux ou rainures et comprenant des parois latérales et une face de contact destinée à venir en contact avec la chaussée.

Une nervure est un élément de relief formé sur une bande de roulement et qui est délimitée par deux rainures orientées dans une même direction ; cette rainure comprend des parois latérales et une face de contact destinée à venir en contact avec la chaussée.

Par rainure, on entend un espace formé dans un élément de relief, cet espace étant délimité par des parois en vis-à-vis, la distance moyenne entre ces parois étant telle qu'elles ne peuvent être en contact l'une avec l'autre dans les conditions usuelles de roulage.

Par incision on entend un espace formé dans un élément de relief, cet espace étant délimité par des parois en vis-à-vis et distantes l'une de l'autre mais pouvant venir au moins partiellement en contact dans les conditions usuelles de roulage.

Par direction radiale, on entend une direction qui est perpendiculaire à l'axe de rotation du pneu (cette direction correspond à la direction mesurant l'épaisseur de la bande de roulement).

Par direction axiale ou transversale, on entend une direction parallèle à l'axe de rotation du pneu.

Par direction circonférentielle, on entend une direction tangente à tout cercle centré sur l'axe de rotation.

Par axialement vers l'extérieur, on entend une direction qui est orientée vers l'extérieur de la cavité interne du pneu à l'intérieur de laquelle s'applique la pression de gonflage.

Côté intérieur d'une bande de roulement d'un pneu : correspond au côté de la bande qui, lors du montage du pneu sur un essieu d'un véhicule poids lourd, fait face au véhicule. Le côté extérieur correspond au côté situé de l'autre côté du plan équatorial par rapport au côté intérieur.

Essieu à monte simple : essieu sur lequel sont montés deux pneus, les côtés intérieurs de ces pneus se faisant face une fois qu'ils ont été mis en place.

Essieu à monte jumelé : essieu sur lequel sont montées deux paires de pneus, pour chaque paire de pneus les côtés intérieurs ne se faisant pas face, seuls les côtés intérieurs des pneus les plus à l'intérieur du véhicule dans chaque paire se faisant face.

### BREF EXPOSÉ DE L'INVElVTION

La présente invention vise à éviter d'avoir à changer de pneus au changement de saison notamment à l'arrivée de l'hiver sur un véhicule poids lourd et plus particulièrement sur les essieux moteur dudit véhicule (« *drive axle»* en anglais) pour lesquels ces changements nécessitent davantage de travail.

A cet effet, l'invention a pour objet un pneu pour véhicule poids selon la revendication 1.

Par taux de creux surfaciques égaux ou sensiblement égal, on entend que l'écart entre les taux de creux est au plus égal à 5%.

Cette relation entre ies taux de creux surfaciques des deux genres de sculpture doit être au moins satisfaite à l'état neuf et jusqu'à une usure correspondant à sensiblement la moitié de l'épaisseur de la bande de roulement.

Par continue circonférentiellement, il faut ici comprendre qu'une nervure peut toutefois être pourvue d'incisions, ces dernières ayant leurs parois qui se mettent en contact au moins en partie lors du passage dans le contact avec une chaussée.

Il est toutefois possible de positionner sur la partie axialement la plus à l'extérieur de la bande et sur ce premier genre de sculpture, une pluralité de rainures ayant des largeurs inférieures aux largeurs des rainures formées sur le second genre de sculpture. Préférentiellement, le ratio entre ces largeurs est au moins égal à trois.

Dans une autre variante de l'invention, la largeur des nervures du second genre de sculpture est supérieure à celle des éléments de relief du premier genre de sculpture. Dans une variante préférentielle, le ratio entre ces largeurs est au plus égal à 1,5.

Pour simplifier la fabrication du pneu pourvu d'une bande de roulement selon l'invention, le matériau composant la bande de roulement est unique et identique que ce soit pour le premier genre de sculpture ou le second genre de sculpture.

Pour optimiser le fonctionnement de chaque genre de sculpture, il est souhaitable d'employer des matériaux spécifiques pour former les premier et second genres de sculpture.

Avantageusement, le taux de creux surfacique de chaque genre de sculpture d'un même pneu est au moins égal à 25% et au plus égal à 40%.

Les éléments de relief du second genre de sculpture sont des blocs comprenant des faces latérales dans ia direction circonférentielle et des faces latérales dans la direction transversale. Afin d'avoir une usure régulière, les faces latérales dans la direction circonférentielle de chaque bloc ont des inclinaisons par rapport à une direction radiale (ou direction perpendiculaire à la surface de roulement) différents. Ainsi la face latérale dont l'intersection avec la face de contact du bloc détermine une arête rentrant la première dans le contact lors du roulage sur une chaussée, est dite face d'attaque (« *leading face »* en anglais). Il est avantageux que cette face d'attaque présente une inclinaison par rapport à une direction radiale qui soit supérieure à l'inclinaison de l'autre face latérale (dite face de fuite - « *trailing face* » en anglais).

Les blocs du second genre de sculpture ont des faces latérales correspondant aux faces d'attaque et de fuite qui présentent des inclinaisons différentes. Il est ainsi préférable que l'angle de la face d'attaque soit supérieur à l'angle de la face de fuite (par exemple 25 degrés sur la face d'attaque et 5 degrés sur la face de fuite) afin de réduire le phénomène d'usure plus prononcé sur une arête que sur l'autre et conduisant à une usure dite irrégulière. Bien entendu, les angles des faces d'attaque des blocs du second genre de sculpture de tous les pneus d'un même essieu moteur sont identiques comme le sont les angles des faces de fuite de ces mêmes pneus.

Préférentiellement, chaque genre de sculpture sur un pneu conforme à l'invention occupe en largeur axiale sensiblement la moitié de la bande de roulement. Mais il est possible, selon le besoin, que l'une ou l'autre des sculptures de premier genre ou de second genre occupe davantage que la moitié de la largeur axiale de la bande.

En outre, l'invention a pour objet un arrangement des pneus sur un essieu directeur d'un véhicule poids lourd permettant de rouler en conservant ces mêmes pneus sur ledit essieu aussi bien en conditions hivernales qu'en conditions non hivernales.

Dans ce but, il est proposé un arrangement selon la revendication 4 de deux pneus sur un essieu directeur d'un véhicule poids lourd, chacun de ces deux pneus étant défini par la revendication 1.

Par taux de creux surfaciques égaux, on entend que l'écart entre les taux de creux est au plus égal à 5%.

En outre, l'invention a pour objet un arrangement des pneus sur un essieu moteur d'un véhicule poids lourd permettant de rouler en conservant ces mêmes pneus sur ledit essieu aussi bien en conditions hivernales qu'en conditions non hivernales.

Dans ce but, il est proposé un arrangement selon la revendication 5 de quatre pneus sur un essieu moteur d'un véhicule poids lourd, chacun de ces quatre pneus étant défini par la revendication 1. cet arrangement de pneus sur essieu moteur étant caractérisé en ce que les premiers genres de sculpture des quatre pneus de cet essieu sont disposés sur ledit essieu de manière à être situés côté intérieur par rapport au véhicule.

Par taux de creux surfaciques égaux, on entend que l'écart entre les taux de creux est au plus égal à 5%.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue en plan du dessin d'une bande de roulement pour un pneu selon l'invention ;
La figure 2 montre un arrangement selon l'invention pour une monte en simple sur essieu directeur d'un véhicule poids lourd ;
La figure 3 montre un arrangement selon l'invention pour une monte jumelée sur essieu moteur d'un véhicule poids lourd ;
La figure 4 montre un arrangement selon l'invention pour une monte en jumelés sur essieu moteur.

### DESCRIPTION DES FIGURES

Pour faciliter la lecture des figures, des mêmes signes de référence peuvent être employés pour la description de variantes de l'invention dès lors que ces signes de référence renvoient à des éléments d'une même nature qu'elle soit structurelle ou bien fonctionnelle.

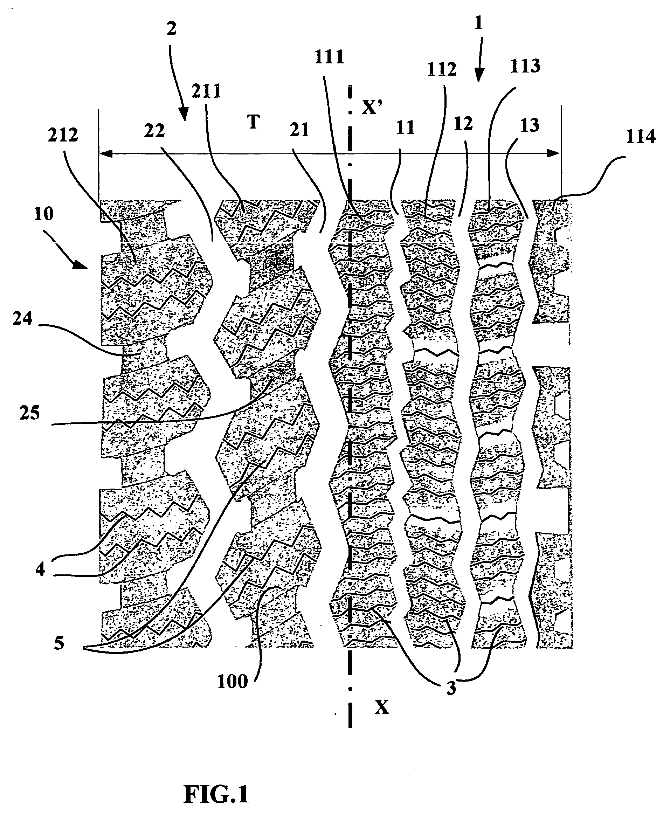

La figure 1 représente une vue en plan du dessin d'une bande de roulement 10 pour un pneu selon l'invention de dimension 315/80 R 22.5. Cette bande de roulement comprend une surface de roulement 100 destinée à venir en contact avec une chaussée et, venant entailler cette surface de roulement, une sculpture formée d'une pluralité d'éléments de relief.

Cette bande de roulement 10 a une largeur T égale à 277 mm correspondant sensiblement à la distance axiale maximale des points de sa surface de roulement pouvant venir en contact avec une chaussée dans les conditions d'usage nominales de pression et de charge.

Sur la figure 1 est montrée la trace XX' de l'intersection du plan médian équatorial avec le plan de la figure, ce plan médian équatorial, perpendiculaire à l'axe de rotation du pneu, passant par les points de la bande de roulement radialement les plus éloignés de l'axe de rotation. Ce plan partage la bande en deux parties.

Une première partie 1, située sur le côté droit de la figure 1, est pourvue avec une sculpture d'un premier genre, cette sculpture de type « glace », c'est-à-dire plutôt adaptée aux roulages sur sol verglacé.

Une seconde partie 2, située sur le côté gauche de la figure 1, est pourvue avec une sculpture d'un second genre de type « neige », cette sculpture étant efficace préférentiellement sur sol enneigé.

Bien entendu, ces deux genres de sculptures présentent des performances satisfaisantes pour la sécurité notamment que la chaussée soit sèche ou humide hors des périodes hivernales. Le matériau constitutif de la bande de roulement, identique pour les première et seconde parties 1, 2 est choisi par la personne du métier aussi pour satisfaire cette condition.

Le premier genre de sculpture situé sur le côté droit de la figure 1 comprend trois rainures 11, 12, 13 zigzag d'orientation générale circonférentielle, ces rainures ayant une profondeur égale à 20 mm et une largeur moyenne égale à 5 mm. Ces rainures délimitent trois nervures 111, 112, 113 de largeur moyenne égale à 35 mm ainsi qu'une rangée 114 de blocs de bord. En outre, chacune des nervures et des blocs de ce premier genre de sculpture est pourvue avec une pluralité d'incisions 3 espacées d'environ 10 mm, ces incisions ayant une profondeur égale à celle des rainures. On forme ainsi une sculpture rigide dans la direction circonférentielle grâce à la présence de nervures continues, les incisions étant de largeur appropriée pour se refermer lors du passage dans le contact avec la chaussée.

Le second genre de sculpture situé sur le côté gauche de la figure 1 comprend deux rainures 21, 22 d'orientation générale circonférentielle, ces rainures ayant une largeur égale à 15 mm et une profondeur égale à 20 mm. Ces rainures 21, 22 ont un tracé en zigzag. Il est en outre formé sur cette partie 2 de la bande de roulement une pluralité de rainures 24, 25 d'orientation oblique par rapport à la direction circonférentielle, ces rainures obliques ayant une largeur égale à la largeur des rainures circonférentielles 21, 22 de la partie 2. Ces rainures obliques 24, 25 délimitent avec les rainures circonférentielles 21, 22 des blocs 211, 212 pourvus avec un petit nombre d'incisions 4, 5 (dans le cas présent, deux incisions en zigzag). Ces blocs ont une largeur axiale moyenne égale à 40 mm. On obtient ainsi une sculpture relativement souple dans la direction circonférentielle comparativement à la sculpture de premier genre.

Pour limiter l'abaissement de rigidité circonférentielle de la sculpture de second genre, on forme des plates-formes entre les blocs 4 et entre les blocs 5. Ces plates-formes ont une hauteur égale à 50% de la profondeur des rainures obliques 24, 25, cette hauteur étant mesurée à partir du fond desdites rainures.

Globalement ce qui distingue le second genre de sculpture du premier genre réside dans une longueur totale de rainures plus important (par rainures, on inclut ici à la fois les rainures circonférentielles et les rainures transversales ou obliques) alors que le nombre de rainures d'orientation générale circonférentielle est inférieur dans ce second genre comparativement au premier genre. En outre, la partie 1 formant le premier genre est pourvue avec davantage d'incisions d'orientation oblique ou transversale. Préférentiellement les blocs du second genre de sculpture sont pourvues avec au plus trois incisions transversales. Pour réduire l'incidence des incisions sur le premier et le second genres de sculpture, il est judicieux de pourvoir les parois limitant ces incisions avec des moyens de blocage mécaniques, comme par exemple des géométries en zigzag ou des reliefs prévus pour coopérer avec des creux.

Les taux d'entaillement surfaciques pour les deux genres de sculpture sont dans le cas présents égaux à 35%.

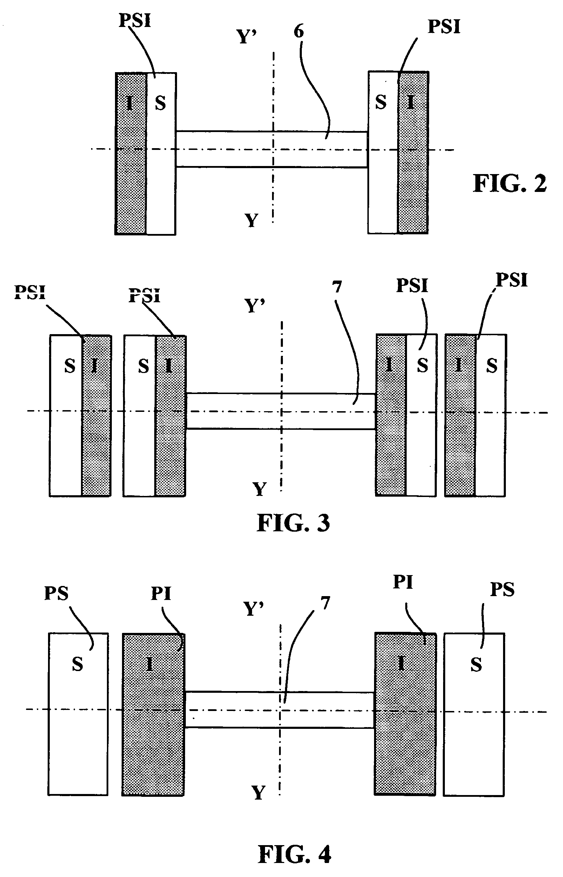

La figure 2 montre un arrangement selon l'invention pour une monte en simple sur un essieu directeur 6 d'un véhicule poids lourd.

Dans ce montage, chaque pneu PSI situé de part et d'autre de l'axe médian du véhicule (trace YY' sur la figure 3), est formée de deux pneus identiques au pneu tel que décrit avec le support de la figure 1. La partie du pneu de second genre de sculpture (notée S sur la figure) est montée de manière à se trouver à l'intérieur c'est-à-dire vers le véhicule au moment du montage sur ledit véhicule. La partie du pneu de premier genre de sculpture (notée I sur la figure) est ainsi orientée vers l'extérieur du véhicule.

La figure 3 montre un arrangement selon l'invention pour une monte jumelée sur un essieu moteur 7 d'un véhicule poids lourd.

Dans ce montage, chaque paire de pneus PSI située de part et d'autre de l'axe médian du véhicule (trace YY' sur la figure 3), est formée de deux pneus identiques au pneu tel que décrit avec le support de la figure 1. Chaque pneu PSI comprend une bande de roulement pourvue avec une sculpture formée d'un premier genre de sculpture (notée I) et d'un second genre de sculpture (notée S) selon l'invention.

Sur cet essieu moteur 7, chaque pneu est monté de manière à ce que la partie de la bande de roulement d'un premier genre de sculpture I soit positionnée entre la partie de la même bande de roulement d'un second genre de sculpture S et l'axe médian YY' du véhicule.

La figure 4 montre un arrangement de pneus selon l'invention équipant en jumelés un essieu moteur 7 d'un véhicule poids lourd, chacun des pneus comprenant un seul genre de sculpture, soit type glace (repéré I sur la figure) soit type neige (repéré S sur la figure).

Dans ce montage, chaque paire de pneus PI, PS située de part et d'autre de l'axe médian du véhicule (trace YY' sur la figure 4), est formée d'un pneu d'un premier genre PI de type « *glace* » et d'un pneu d'un second genre PS de type « *neige* », le pneu de premier genre PI étant situé entre le pneu de second genre PS et l'axe médian YY' du véhicule. Ces pneus qu'ils soient d'un premier ou d'un second genre ont un même taux de creux surfacique (c'est-à-dire ayant une différence de taux de creux surfacique au plus égal à 5%).

Bien entendu, l'invention n'est pas limitée aux exemples décrits et représentés et diverses modifications peuvent y être apportées sans sortir du cadre défini par les revendications.

## Revendications

1. Pneu pour véhicule poids lourd ayant une bande de roulement (10) pourvue d'un côté du plan médian équatorial avec une sculpture d'un premier genre (1) et de l'autre côté du plan médian équatorial avec une sculpture d'un second genre (2),
- le premier genre de sculpture comprenant au moins trois rainures (11, 12, 13) d'orientation générale circonférentielle, ces rainures délimitant au moins deux nervures continues (111, 112, 113) d'orientation générale circonférentielle, ces nervures continues étant pourvues avec une pluralité d'incisions (3) orientées transversalement ou sensiblement transversalement,
- le second genre de sculpture comprenant au moins deux rainures (21, 22) d'orientation générale circonférentielle et une pluralité de rainures (24, 25) d'orientation générale transversales, ces rainures délimitant une pluralité de blocs (211, 212),
- sur chaque genre de sculpture, il est défini un taux de creux surfacique, cette bande de roulement étant **caractérisée en ce que** le taux de creux surfacique du premier genre de sculpture est égal ou sensiblement égal au taux de creux du second type de sculpture,
et **en ce que**, les blocs (211, 212) ayant des faces d'attaque et de fuite, l'angle de la face d'attaque est différent de l'angle de la face fuite, ces angles étant mesurés par rapport à la direction radiale

2. Pneu selon la revendication 1 **caractérisé en ce que** l'écart entre les taux de creux surfacique est au plus égal à 5%.

3. Pneu selon la revendication 1 ou la revendication 2 **caractérisé en ce que**, les blocs (211, 212) sont pourvus avec au plus trois incisions.

4. Arrangement de deux pneus sur un essieu directeur d'un véhicule poids lourd ayant un axe médian YY', chacun de ces deux pneus étant défini par une des revendications précédentes,
cet arrangement de pneus sur essieu directeur étant **caractérisé en ce que** la partie de la bande de roulement d'un second genre est positionnée entre la partie de la même bande de roulement d'un premier genre et l'axe médian YY' du véhicule.

5. Arrangement de quatre pneus sur un essieu moteur d'un véhicule poids lourd ayant un axe médian YY', chacun de ces pneus étant défini par une des revendications précédentes,
cet arrangement de pneus sur essieu moteur étant **caractérisé en ce que** la partie de la bande de roulement d'un premier genre est positionnée entre la partie de la même bande de roulement d'un second genre et l'axe médian YY' du véhicule.

## Patentansprüche

1. Reifen für Schwerlastfahrzeug mit einer Lauffläche (10), die auf einer Seite der äquatorialen Mittelebene mit einem Profil eines ersten Typs (1) und auf der anderen Seite der äquatorialen Mittelebene mit einem Profil eines zweiten Typs (2) versehen ist,
- wobei der erste Profiltyp mindestens drei im Allgemeinen in Umfangsrichtung verlaufende Rillen (11, 12, 13) umfasst, wobei diese Rillen mindestens zwei im Allgemeinen in Umfangsrichtung verlaufende durchgehende Stege (111, 112, 113) begrenzen, wobei diese durchgehenden Stege mit einer Vielzahl von quer oder im Wesentlichen quer verlaufenden Einschnitten (3) versehen sind,
- wobei der zweite Profiltyp mindestens zwei im Allgemeinen im Unfangsrichtung verlaufende Rillen (21, 22) und eine Vielzahl von im Allgemeinen quer verlaufenden Rillen (24, 25) umfasst, wobei diese Rillen eine Vielzahl von Blöcken (211, 212) begrenzen,
- an jedem Profiltyp ist ein Grad der Oberflächenvertiefung definiert, wobei diese Lauffläche **dadurch gekennzeichnet ist, dass** der Grad der Oberflächenvertiefung des ersten Profiltyps gleich oder im Wesentlichen gleich dem Grad der Oberflächenvertiefung des zweiten Profiltyps ist,
und dadurch, dass sich, da die Blöcke (211, 212) Vorder- und Hinterflächen haben, der Winkel der Vorderfläche von dem Winkel der Hinterfläche unterscheidet, wobei diese Winkel bezogen auf die radiale Richtung gemessen werden.

2. Reifen nach Anspruch 1, **dadurch gekennzeichnet, dass** der Unterschied zwischen den Oberflächenvertiefungsgraden höchstens 5 % beträgt.

3. Reifen nach Anspruch 1 oder Anspruch 2, **dadurch gekennzeichnet, dass** die Blöcke (211, 212) mit höchstens drei Einschnitten versehen sind.

4. Anordnung von zwei Reifen auf einer Lenkachse eines Schwerlastfahrzeugs mit einer Mittelachse YY', wobei jeder dieser Reifen durch einen der vorhergehenden Ansprüche definiert ist, wobei diese Anordnung von Reifen auf einer Lenkachse **dadurch gekennzeichnet ist, dass** der Teil der Lauffläche eines zweiten Typs zwischen dem Teil derselben Lauffläche eines ersten Typs und der Mittelachse YY' des Fahrzeugs positioniert ist.

5. Anordnung von vier Reifen auf einer Antriebsachse eines Schwerlastfahrzeugs mit einer Mittelachse YY', wobei jeder dieser Reifen durch einen der vorhergehenden Ansprüche definiert ist, wobei diese Anordnung von Reifen auf einer Antriebsachse **dadurch gekennzeichnet ist, dass** der Teil der Lauffläche eines ersten Typs zwischen dem Teil derselben Lauffläche eines zweiten Typs und der Mittelachse YY' des Fahrzeugs positioniert ist.

## Claims

1. Tyre for a heavy goods vehicle having a tread (10) provided on one side of the equatorial median plane with a sculpture of a first kind (1) and on the other side of the equatorial median plane with a sculpture of a second kind (2),
- the first kind of sculpture comprising at least three grooves (11, 12, 13) of generally circumferential orientation, these grooves delimiting at least two ribs (111, 112, 113) of generally circumferential orientation, these ribs being provided with a plurality of sipes (3) oriented transversely or substantially transversely,
- the second kind of sculpture comprising at least two grooves (21, 22) of generally circumferential orientation and a plurality of grooves (24, 25) of generally transverse orientation, these grooves delimiting a plurality of blocks (211, 212),
- defined on each kind of sculpture is a ratio of surface recess, this tread being **characterized in that** the ratio of surface recess of the first kind of sculpture is equal or substantially equal to the ratio of recess of the second kind of sculpture,
and **in that**, the blocks (211, 212) having leading and trailing faces, the angle of the leading face is different from the angle of the trailing face, these angles being measured relative to the radial direction.

2. Tyre according to Claim 1, **characterized in that** the difference between the ratios of surface recess is at most equal to 5%.

3. Tyre according to Claim 1 or Claim 2, **characterized in that** the blocks (211, 212) are provided with at most three sipes.

4. Arrangement of two tyres on a steering axle of a heavy goods vehicle having a median axis YY', each of these two tyres being defined by one of the preceding claims, this arrangement of tyres on a steering axle being **characterized in that** the portion of the tread of a second kind is positioned between the portion of the same tread of a first kind and the median axis YY' of the vehicle.

5. Arrangement of four tyres on a drive axle of a heavy goods vehicle having a median axis YY', each of these tyres being defined by one of the preceding claims, this arrangement of tyres on the drive axle being **characterized in that** the portion of the tread of a first kind is positioned between the portion of the same tread of a second kind and the median axis YY' of the vehicle.
